# FASCICULE DE BREVET EUROPEEN

(11) **EP 1 101 560 B1**
(45) Date de publication et mention de la délivrance du brevet: **26.01.2005**
(21) Numéro de dépôt: 00403121.7
(22) Date de dépôt: 09.11.2000
(51) Int. Cl.: B23K 9/16, B23K 101/26, B23K 9/038, E01B 11/50

(54) **Procédé de soudage de deux éléments métalliques**
Vefahren zum Schweissen von zwei metallischen Werkstücken
Welding process for assembling two metallic workpieces

(30) Priorité: 16.11.1999 FR 9914370
(43) Date de publication de la demande: 23.05.2001
(73) Titulaire: Vossloh Cogifer, 92500 Rueil Malmaison (FR)
(72) Inventeur: Lacave, Jean-Christophe, 67500 Haguenau (FR); Mugg, Philippe, 67500 Haguenau (FR)
(74) Mandataire: Blot, Philippe Robert Emile

(56) Documents cités:
- WO-A-91/16167
- BE-A- 633 603
- CH-A- 678 538
- DE-A- 1 515 248
- DE-B- 1 191 922
- FR-A- 2 054 930
- US-A- 5 175 405
- US-A- 5 773 779

## Description

La présente invention concerne un procédé de soudage manuel en bout avec apport de métal d'un tronçon de rail et d'un bloc métallique massif délimitant, entre leurs faces en regard, une chambre profonde à remplir avec le métal d'apport, laquelle chambre s'ouvre sur l'extérieur par un passage d'accès supérieur transversal aux deux faces et a depuis ce passage, une profondeur supérieure à quatre fois l'écartement entre les deux faces en regard des deux éléments à souder.

Dans le domaine de la construction des voies de chemin de fer, ainsi que dans d'autres domaines de la chaudronnerie, il est nécessaire de souder bout à bout un profilé tel qu'un élément de rail à l'extrémité d'un bloc métallique massif de hauteur égale ou supérieure.

Les rails de chemin de fer comportent généralement une âme verticale reposant sur un patin d'appui horizontal. A l'extrémité supérieure de l'âme est prévu un champignon définissant la surface de roulement pour les roues d'un véhicule ferroviaire.

Ainsi, en section, un rail a une hauteur mesurée du patin au champignon très supérieure à sa largeur dans sa partie courante, c'est-à-dire dans la région de l'âme.

Lors du soudage en bout d'un rail, la chambre devant être remplie avec du métal d'apport présente une hauteur ou profondeur très supérieure à l'écartement entre les deux éléments à souder, ainsi qu'à la largeur du rail dans sa partie courante.

De plus, les rails étant posés à plat sur leur patin, il n'est pas souhaité de souder les rails depuis leur face latérale puisqu'il conviendrait alors d'effectuer des soudures verticales remontantes qui sont complexes à réaliser.

Ainsi, il est préférable de pouvoir souder les rails par le dessus.

Pour un procédé de soudage à l'arc conventionnel, l'accès à la chambre de réception du métal d'apport est donc délicat, du fait de sa faible largeur relativement à sa profondeur.

Ainsi, afin d'effectuer de tels soudures, il est courant d'utiliser un procédé de soudage à l'arc à l'aide de baguettes enrobées, un procédé de soudage semi-automatique à l'aide d'un fil fourré, ou un procédé dit "soudure aluminothermique".

Toutefois, les baguettes ainsi que les fils fourrés dégagent, lors de leur utilisation, une fumée protégeant le bain de fusion de l'oxydation. Cette fumée abondante occulte la région de soudage et crée une perturbation majeure pour le soudeur qui ne dispose alors pas d'une visibilité satisfaisante de la région en cours de soudage.

Par ailleurs, dans les travaux de chaudronnerie en acier de moyenne épaisseur, c'est-à-dire de l'ordre de 5 à 25 mm, des éléments métalliques sont également parfois soudés entre eux à l'aide de procédés de soudage à l'arc semi-automatiques à fils pleins associés à une protection gazeuse. Toutefois, de tels procédés de soudage sont utilisés exclusivement dans des ateliers couverts et ne sont pas utilisés dans les domaines des installations fixes ferroviaires. Les torches utilisées ont une longueur totale de l'ordre de 75 mm et un diamètre d'environ 25 mm.

US-5,773,779 décrit un procédé de soudage de deux rails.

L'invention a pour but de fournir un procédé et un équipement de soudage bout à bout d'un tronçon de rail et d'un bloc métallique massif ne présentant pas les inconvénients mentionnés ci-dessus, qui permettent d'obtenir une soudure de qualité en facilitant l'intervention du soudeur sans qu'il soit nécessaire de tourner les pièces à souder.

A cet effet, l'invention a pour objet un procédé de soudage selon la revendication 1.

Suivant des modes particuliers de réalisation, le procédé comporte l'une ou plusieurs des caractéristiques des revendications dépendantes.

L'invention sera mieux comprise à la lecture de la description qui va suivre, donnée uniquement à titre d'exemple et faite en se référant aux dessins, sur lesquels :
- la figure 1 est une vue de dessus schématique montrant dans un coeur de croisement les régions pouvant être soudées par un procédé selon l'invention.
- la figure 2 est une vue en perspective illustrant la disposition d'un tronçon de rail et d'un coeur de croisement avant soudage ;
- la figure 3 est une vue en perspective de dessous de l'agencement de la figure 1 lors d'une phase préliminaire de chauffage ;
- la figure 4 est une vue en perspective de la torche de soudage selon l'invention ;
- la figure 5 est une vue en élévation avec arrachement partiel du bec de la torche de soudage de la figure 4 ; et
- la figure 6 est une vue en perspective analogue à celle de la figure 4 illustrant le soudage par mise en oeuvre d'un procédé selon l'invention.

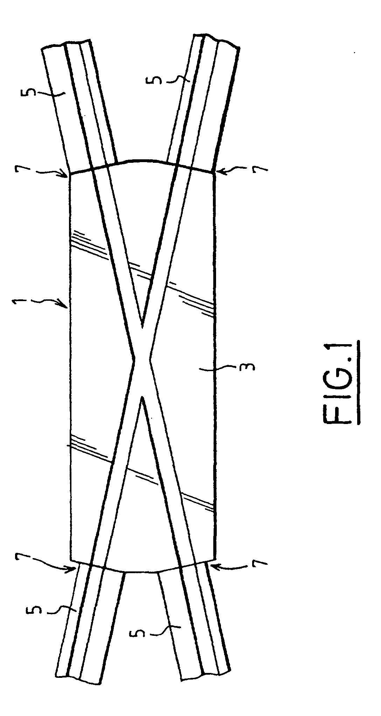

Le coeur de croisement 1 représenté sur la figure 1 comporte un bloc massif central 3 de forme sensiblement parallélépipédique. Aux extrémités du bloc 3 sont rapportés, par soudage en bout, quatre tronçons de rails 5 deux à deux coaxiaux, les axes communs ainsi définis étant concourants. Les soudures 7 sont réalisées par un procédé de soudage selon l'invention tel que décrit ci-après.

Le bloc massif et les tronçons de rail sont supposés réalisés dans un acier ayant une teneur en carbone supérieure à 0,5 %. En effet, le procédé est particulièrement intéressant pour ce type d'acier où les soudures doivent être réalisées avec soin.

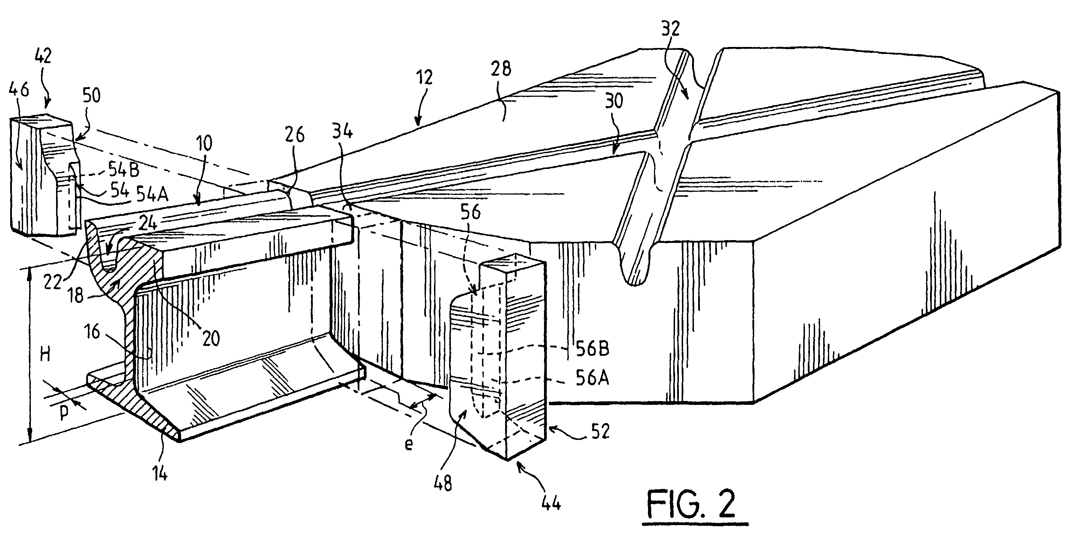

Sur la figure 2 est représenté en détail un exemple de deux éléments pouvant être liés l'un à l'autre par un procédé de soudage selon l'invention.

Sur cette figure, on reconnaît un tronçon de rail à gorge 10 pour une voie de tramway et un bloc central 12 du coeur de croisement.

Le tronçon de rail 10 comporte un patin 14 destiné à reposer horizontalement sur des appuis, une âme 16 et un champignon 18. Ce champignon comporte un corps 20 et une bavette 22 délimitant entre eux une ornière 24 de réception du boudin de la roue du véhicule ferroviaire.

La hauteur H du rail est par exemple égale à 150 mm. L'épaisseur p de l'âme 16 est comprise suivant le type de rail entre 10 et 20 mm.

A un bout, le rail 12 est soudé suivant une face de liaison 26 au bloc central 12 du coeur de croisement. Ce dernier présente sensiblement la forme d'un parallélépipédique rectangle. Sur sa face supérieure 28 sont creusés deux ornières sécantes 30, 32.

Aux extrémités des ornières, les faces latérales du bloc 12 sont bi-sautées pour s'étendre suivant des plans perpendiculaires à l'axe des ornières 30 et 32. En particulier, le tronçon de rail 10 est soudé suivant l'une de ses faces biseautées notée 34. Le rail 10 est disposé de sorte que les ornières 24 et 30 soient coaxiales.

Avant soudage, les faces en regard 26 et 34 du rail 10 et du bloc central 12 du coeur de croisement sont séparées par une chambre destinée à recevoir le métal d'apport lors du soudage pour une liaison métallurgique et mécanique. Les faces en regard sont écartées d'un intervalle e mesuré suivant l'axe des ornières 24, 30 sensiblement égal à 20 mm.

Le patin 14 est d'abord soudé au bloc 12 suivant un procédé classique, aucun problème d'accès n'étant rencontré.

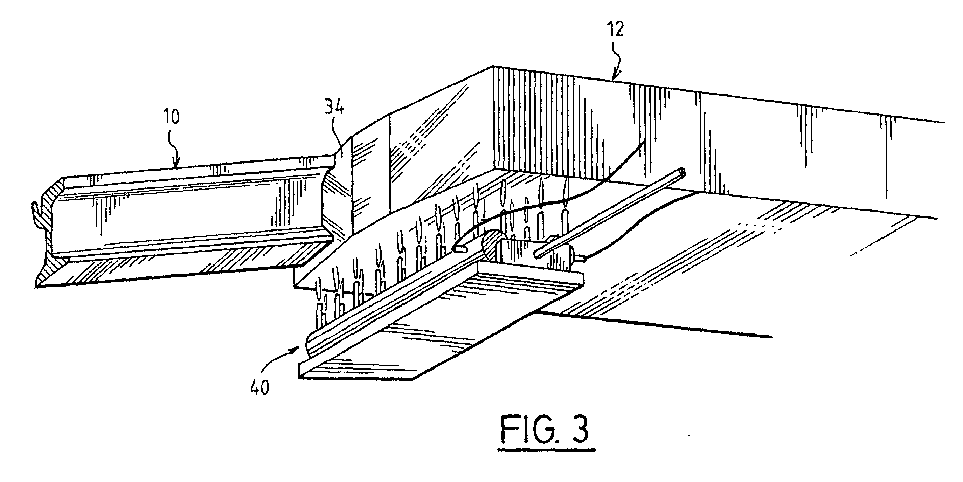

Avant de réaliser le soudage proprement dit de l'âme et du champignon, le bloc 12 est chauffé, dans la région de la face inclinée 34 pour atteindre une température comprise entre 300°C et 500°C. Ce chauffage s'effectue, comme illustré sur la figure 3, à l'aide d'une ou plusieurs rampes de brûleurs 40 appliqués sur la surface inférieure du bloc 12. Ces rampes de brûleurs 40 fournissent une puissance calorifique de l'ordre de 50 kW.

Le chauffage du bloc 12 est effectué jusqu'à une température très élevée pour apporter une énergie suffisante au bloc afin qu'il la restitue ensuite progressivement au cours de toute l'opération de soudage, supprimant ainsi les réchauffages intermédiaires occasionnant des interruptions du bain de fusion.

Comme illustré sur la figure 2, avant la phase d'apport de métal, des formes 42, 44 sont placées à l'extrémité du rail 10 de part et d'autre de la chambre 36 devant être emplie de soudure. Ces formes 42, 44 ont généralement un profil correspondant au profil latéral du rail. Elles présentent ainsi un renflement 46, 48 adapté pour être reçu entre le patin 14 et le champignon 18, en prenant appui sur la surface latérale de l'âme 16.

En outre, chaque forme présente une surface plane 50, 52 d'appui sur la surface inclinée 34 du bloc.

Dans la région de liaison des renflements 46, 48 avec les surfaces d'appui 50, 52, les formes 42, 44 présentent des dégagements verticaux 54, 56 s'étendant suivant toute la hauteur des renflements. Ces dégagements présentent une section polygonale constante suivant toute leur hauteur. Ainsi, ceux-ci sont définis par deux faces 54A, 54B et 56A, 56B s'étendant perpendiculairement deux à deux. La largeur des dégagements, mesurée suivant l'axe longitudinal du rail 10, est égale à l'écartement e séparant les faces 26 et 34 des deux éléments à souder.

La profondeur des dégagements 54 et 56, mesurée suivant la face 34, est comprise entre 1 et 2 cm.

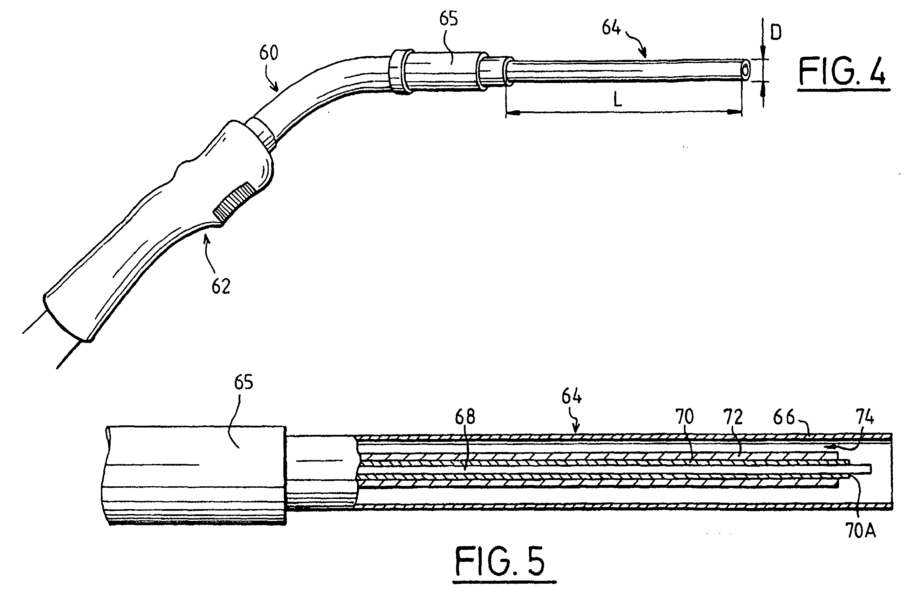

Selon l'invention, la soudure est réalisée par soudage à l'arc au fil plein sous protection gazeuse du bain de fusion. Pour la réalisation de cette soudure, une torche 60 représentée sur les figures 4 et 5 est utilisée. Celle-ci comporte une poignée 62 prolongée par un long bec de soudage 64 fixé à la poignée par un tronçon de connexion 65 . Le bec de soudage présente un tronçon rectiligne ayant une longueur L supérieure à 150 mm. Elle est par exemple égale à 165 mm. Le diamètre extérieur D de ce tronçon étant sensiblement égale à 15 mm.

Le bec rectiligne 64 a une longueur supérieure à la hauteur H totale du rail à souder, c'est-à-dire à la profondeur de la chambre 36. Le bec 64 a ainsi une longueur supérieure à six fois son diamètre extérieur et, avantageusement, supérieure à dix fois ce diamètre.

Le diamètre D est compris entre 50 et 90 % de l'écartement entre les faces en regard des deux éléments à souder. Avantageusement, il est égal à sensiblement 80 % de cet écartement.

Comme représenté sur la figure 4, le bec 64 est délimité extérieurement par une jupe cylindrique 66 de section circulaire. Un fil plein de métal d'apport 68 circule à l'intérieur du bec 64 suivant l'axe de la jupe 66. Le fil est guidé à l'intérieur d'un tube contact 70 conducteur de l'électricité dont le diamètre intérieur est très légèrement supérieur au diamètre extérieur du fil 68.

Sur l'essentiel de sa longueur, le tube contact 70 est recouvert extérieurement d'un matériau isolant électriquement 72, tel qu'une gaine thermo-rétractable.

Entre la couche de matériau isolant 72 et la jupe 66 est ainsi défini un passage annulaire 74 d'écoulement d'un gaz inerte de protection. La section du passage 74 est choisie suffisante pour permettre le passage du débit de gaz nécessaire à la soudure.

Le tube contact 70 est relié à une source électrique de soudage alors que les pièces à souder sont reliées à la masse.

La couche de matériau isolant 72 évite la formation d'arc électrique entre le fil 68 ou le tube contact 70 et la jupe 66.

Le tube contact 70 s'étend sensiblement suivant toute la longueur de la jupe 66. Son extrémité 70A est toutefois à l'intérieur de l'espace délimité par la jupe 66, légèrement en arrière de son extrémité libre.

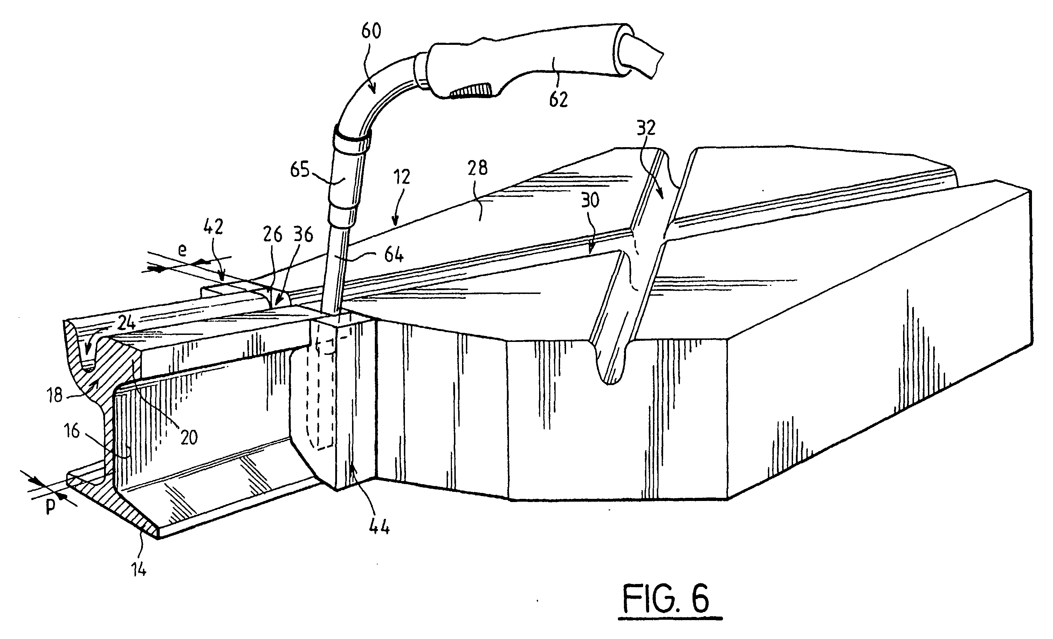

Comme illustré sur la figure 6, pour procéder au soudage, le soudeur introduit le bec 64 à l'intérieur de la chambre 36 réservée pour la soudure depuis le passage supérieur défini entre le champignon du rail et la surface supérieure du bloc 12. La longueur du bec 64 permet de procéder au soudage des deux éléments depuis le fond de la chambre et de remonter progressivement au fur et à mesure du remplissage, créant ainsi une continuité métallurgique des faces en regard.

L'utilisation d'un fil plein et d'une protection gazeuse évite la formation de fumées occultant la zone de travail.

De plus, du fait de l'absence de laitier, les formes peuvent être appliquées contre les pièces à souder sans qu'il soit nécessaire de laisser des passages d'évacuation du laitier. Ainsi, après démoulage, l'aspect de la soudure est amélioré. Notamment, les amorces de rupture sont réduites et tout risque d'inclusion est évité.

Ainsi, même si le bec 64 a un encombrement radial important, a priori incompatible avec la distance entre les deux pièces, l'emploi d'une telle torche de soudage facilite le travail du soudeur.

La présence des dégagements 54 et 56 augmente de plus latéralement l'espace pour le déplacement du bec de soudage, facilitant encore le travail du soudeur.

Ces dégagements permettent notamment l'inclinaison de la torche suivant un angle d'incidence de quelques degrés lors de l'établissement de l'arc, ce qui est suffisant pour assurer une bonne pénétration de la soudure.

Ainsi, les risques de création de racines au départ de la soudure sont réduits.

Le présent procédé de soudage permet d'effectuer la liaison d'un rail à une face lisse d'un bloc métallique sans qu'il soit nécessaire d'usiner cette face pour qu'elle présente en section un profil identique à celui du rail, comme cela est souvent pratiqué. La suppression de cette étape d'usinage réduit le coût de la liaison.

## Revendications

1. Procédé de soudage manuel en bout avec apport de métal d'un tronçon de rail (10) et d'un bloc métallique massif (12) délimitant, entre leurs faces en regard (26, 34), une chambre profonde (36) à remplir avec le métal d'apport, laquelle chambre (36) s'ouvre sur l'extérieur par un passage d'accès supérieur transversal aux deux faces et a depuis ce passage, une profondeur supérieure à quatre fois l'écartement entre les deux faces en regard des deux éléments à souder, **caractérisé en ce qu'**il comporte la mise en oeuvre d'un soudage à l'arc sous protection gazeuse avec un fil fusible plein à l'aide d'une torche de soudage (60) ayant un bec (64) d'une longueur totale supérieure à la profondeur de la chambre (36) à remplir, ledit bec (64) étant introduit depuis le passage d'accès à ladite chambre (36),
**en ce que**, avant mise en oeuvre du soudage à l'arc sous protection gazeuse, le bloc métallique massif (12) est préchauffé au moins dans la région adjacente à la chambre (36) à remplir, jusqu'à une température très élevée pour apporter une énergie suffisante au bloc métallique massif afin qu'il la restitue ensuite progressivement au cours de toute l'opération de soudage sans réchauffage intermédiaire.

2. Procédé de soudage selon la revendication 1, **caractérisé en ce que** le préchauffage est effectué jusqu'à une température comprise entre 300°C et 500°C.

3. Procédé de soudage selon l'une quelconque des revendications précédentes, **caractérisé en ce que** l'étape de soudage à l'arc sous protection gazeuse, des formes (42, 44) sont disposées de part et d'autre de la chambre (36) à remplir entre le tronçon de rail (10) et le bloc métallique massif (12), le passage d'accès étant délimité entre les deux formes (42, 44) et le tronçon de rail (10) et le bloc métallique massif (12).

4. Procédé de soudage selon la revendication 3, **caractérisé en ce que** des dégagements (54, 56) sont prévus dans les formes (42, 44), ces dégagements étant contigus à la chambre (36) à remplir, augmentant le volume de celle-ci.

5. Procédé selon l'une quelconque des revendications précédentes, **caractérisé en ce que**, pendant le soudage, un gaz de protection est apporté en continu localement dans la région de soudage par un conduit d'alimentation (74) de la torche (60).

6. Procédé selon l'une quelconque des revendications précédentes, **caractérisé en ce que** le bec (64) de la torche de soudage a un diamètre extérieur compris entre 50 et 90 % de l'écartement entre les deux faces en regard des éléments à souder.

7. Procédé selon l'une quelconque des revendications précédentes, **caractérisé en ce qu'**il est mis en oeuvre pour souder des éléments en acier dont la teneur en carbone est supérieure à 0,5 %.

## Claims

1. Process for manually butt welding, with a filler metal, a section of rail (10) and a heavy metal block (12) defining, between their opposite faces (26, 34), a deep chamber (36) to be filled with the filler metal, the said chamber (36) opening outwards via an upper passage transverse to the two faces and having, from this passage, a depth which is four times greater than the distance between the two opposite faces of the two elements to be welded, **characterised in that** it comprises the implementation of gas shielded arc welding with a solid fuse wire with the aid of a welding torch (60) with a nozzle (64) whose total length is greater than the depth of the chamber (36) to be filled, the said nozzle (64) being introduced from the access passage to the said chamber (36),
**in that**, before the implementation of gas shielded arc welding, the heavy metal block (12) is heated, at least in the area adjacent to the chamber to be filled (36), to a very high temperature to supply sufficient energy to the heavy metal block so that it then releases it progressively during the entire welding operation without any intermediate reheating.

2. Welding process according to claim 1, **characterised in that** heating is carried out to a temperature of between 300°C and 500°C.

3. Welding process according to any of the preceding claims, **characterised in that**, at the step for gas shielded arc welding, moulds (42, 44) are arranged on either side of the chamber to be filled (36) between the section of rail (10) and the heavy metal block (12), with the access passage being defined between the two moulds (42, 44) and the section of rail (10) and the heavy metal block (12).

4. Welding process according to claim 3, **characterised in that** clearances (54, 56) are provided in the moulds (42, 44), these clearances being contiguous with the chamber to be filled (36) thereby increasing its volume.

5. Process according to any of the preceding claims, **characterised in that**, during welding, a shielding gas is continuously applied locally in the welding area via a feed pipe (74) of the torch (60).

6. Process according to any of the preceding claims, **characterised in that** the nozzle (64) of the welding torch has an external diameter of between 50 and 90% of the distance between the two opposite faces of the elements to be welded.

7. Process according to any of the preceding claims, **characterised in that** it is implemented to weld steel elements with a carbon level higher than 0.5%.

## Patentansprüche

1. Verfahren zum manuellen Stumpfschweißen eines Schienenabschnitts (10) und eines massiven Metallblocks (12) unter Metallzusatz, die zwischen ihren einander gegenüberstehenden Seiten (26, 34) eine mit dem Zusatzmetall zu füllende tiefe Kammer (36) begrenzen, die sich nach außen über einen oberen, sich quer zu den beiden Seiten erstreckenden Zugangsdurchgang öffnet und von diesem Durchgang aus eine Tiefe von mehr als dem Vierfachen des Abstands zwischen den beiden gegenüberliegenden Seiten der beiden zu verschweißenden Elemente aufweist, **dadurch gekennzeichnet, dass** es die Durchführung einer Lichtbogenschweißung unter Gasschutz mit einem vollen Schmelzdraht mit Hilfe eines Schweißbrenners (60) mit einer Spitze (64) mit einer Gesamtlänge von mehr als der Tiefe der zu füllenden Kammer (36) umfasst, wobei diese Spitze (64) von dem Zugangsdurchgang aus in diese Kammer (36) eingeführt wird, und
dass vor der Durchführung der Lichtbogenschweißung unter Gasschutz der massive Metallblock (12) mindestens in dem der zu füllenden Kammer (36) benachbarten Bereich auf eine sehr hohe Temperatur vorerhitzt wird, um dem massiven Metallblock eine ausreichende Energie zuzuführen, damit er sie dann allmählich während des gesamten Schweißvorgangs ohne Zwischenerhitzung wieder abgibt.

2. Schweißverfahren nach Anspruch 1, **dadurch gekennzeichnet, dass** die Vorerhitzung bis zu einer Temperatur zwischen 300°C und 500°C durchgeführt wird.

3. Schweißverfahren nach einem der vorhergehenden Ansprüche, **dadurch gekennzeichnet, dass** während des Schritts der Lichtbogenschweißung unter Gasschutz zu beiden Seiten der zu füllenden Kammer (36) zwischen dem Schienenabschnitt (10) und dem massiven Metallblock (12) Formen (42, 44) angeordnet sind, wobei der Zugangsdurchgang zwischen den beiden Formen (42, 44) und dem Schienenabschnitt (10) und dem massiven Metallblock (12) begrenzt ist.

4. Schweißverfahren nach Anspruch 3, **dadurch gekennzeichnet, dass** in den Formen (42, 44) Aussparungen (54, 56) vorgesehen sind, die an die zu füllende Kammer (36) angrenzen und deren Volumen vergrößern.

5. Verfahren nach einem der vorhergehenden Ansprüche, **dadurch gekennzeichnet, dass** während der Schweißung ein Schutzgas kontinuierlich örtlich in den Schweißbereich über einen Versorgungskanal (74) des Schweißbrenners zugeführt wird.

6. Verfahren nach einem der vorhergehenden Ansprüche, **dadurch gekennzeichnet, dass** die Spitze (64) des Schweißbrenners einen Außendurchmesser besitzt, der zwischen 50 und 90% des Abstands zwischen den beiden gegenüberstehenden Seiten der zu schweißenden Elemente beträgt.

7. Verfahren nach einem der vorhergehenden Ansprüche, **dadurch gekennzeichnet, dass** es zum Schweißen von Elementen aus Stahl eingesetzt wird, dessen Kohlenstoffgehalt mehr als 0,5 % beträgt.
